# DEMANDE DE BREVET EUROPEEN

(11) **EP 2 372 527 A1**
(43) Date de publication de la demande: **05.10.2011**
(21) Numéro de dépôt: 11160346.0
(22) Date de dépôt: 30.03.2011
(51) Int. Cl.: G06F 3/14, G06T 1/00, H04L 29/06

(54) **Système d'affichage de graphiques sur écran, dispositifs et procédés associés**

(30) Priorité: 30.03.2010 FR 1052342
(71) Demandeur: Airbus Operations, 31060 Toulouse (FR)
(72) Inventeur: Verbeque, Pierre, 31700, CORNEBARRIEU (FR); Collomb, Aurélien, 31500, TOULOUSE (FR)
(74) Mandataire: Bonnans, Arnaud

(57) **Abrégé**

Un système d'affichage de graphiques sur au moins un écran comprend :
- un premier processeur (12) apte à exécuter une application (APPL_{A}) générant des instructions graphiques (INSTR_{A}) ;
- des moyens d'exécution d'une seconde application (APPL_{B}) générant des instructions graphiques (INSTR_{B}) ;
- un second processeur (16) relié au premier processeur au moyen d'un réseau apte à transmettre les instructions graphiques (INSTR_{A}) du premier processeur (12) au second processeur (16) ;
- une carte graphique associée au second processeur (16) et apte à exécuter pour affichage sur l'écran (18), les instructions graphiques (INSTR_{A}) reçues par le second processeur (16) et les instructions graphiques (INSTR_{B}) générées par la seconde application (APPL_{B}) et reçues via le réseau.

Des dispositifs et un procédé associés sont également proposés.

## Description

L'invention concerne un système d'affichage de graphiques sur écran, ainsi que des dispositifs et un procédé associés.

Il est courant de souhaiter afficher des graphiques générés par une ou plusieurs applications exécutées chacune par un processeur sur un ou plusieurs écrans en ayant la possibilité de faire varier la partie d'écran (éventuellement d'un écran à un autre) sur laquelle les graphiques doivent être affichés.

Ceci est notamment le cas dans un cockpit d'avion où différentes applications génèrent des graphiques qui doivent pouvoir être affichés de manière variable sur les différents écrans du cockpit, par exemple en fonction de la phase de vol concernée.

Dans une conception classique, chaque application est exécutée par le processeur d'un ordinateur (par exemple de type PC) et génère sur une carte graphique de cet ordinateur un signal vidéo représentatif des graphiques à afficher : la redirection des signaux vidéo ainsi générés vers l'écran auquel ils sont destinés est alors assurée par une matrice vidéo physique qui permet, par des connexions électriques adéquates au sein de celle-ci, de relier la sortie vidéo de chaque carte graphique à l'écran visé.

L'utilisation d'une matrice vidéo est toutefois problématique, non seulement du fait de sa taille et de son coût mais en outre à cause de son manque de souplesse (le nombre d'entrées et de sorties étant par exemple nécessairement en nombre limité pour une matrice vidéo donnée) et donc d'évolutivité. Cette technique nécessite en outre de gérer chaque écran de manière globale.

On connaît également des systèmes dans lesquels un premier dispositif envoie des commandes de tracé à des seconds dispositifs de rendu et d'affichage, comme décrit par exemple dans les documents US 2009/002263 et US 6 249 294.

Dans ce contexte, l'invention propose un système d'affichage de graphiques sur au moins un écran, caractérisé en ce qu'il comprend :
- un premier processeur apte à exécuter une première application générant des instructions graphiques ;
- des moyens d'exécution d'une seconde application générant des instructions graphiques ;
- un second processeur relié au premier processeur au moyen d'un réseau apte à transmettre les instructions graphiques du premier processeur au second processeur ;
- une carte graphique associée au second processeur et apte à exécuter (pour affichage sur l'écran) les instructions graphiques reçues par le second processeur et les instructions graphiques générées par la seconde application et reçues via le réseau.

Les graphiques générés par l'application peuvent ainsi être affichés sur l'écran. Cette configuration est en outre très souple puisque l'on peut de manière très simple envoyer les instructions graphiques à un autre écran associé à un autre processeur du même type. On peut en outre gérer des zones d'écran, et non nécessairement des écrans entiers.

Cette conception permet au surplus de combiner facilement les graphiques générés par les deux applications.

Le second processeur associé à la carte graphique est par ailleurs apte à recombiner les informations graphiques reçues, et ainsi à effectuer éventuellement un post-traitement (rotation, déformation, etc.).

Ainsi, le système peut comprendre une pluralité d'écrans et une carte graphique apte à exécuter les instructions graphiques peut être associée à chaque écran.

Les graphiques générés par la seconde application représentent par exemple alors un curseur destiné à être affiché sur les graphiques générés par l'application exécutée par le premier processeur.

Le réseau est par exemple de type Ethernet. On peut prévoir par ailleurs qu'un serveur comprenne la carte graphique et le second processeur.

En pratique, la carte graphique est par exemple apte à générer un signal vidéo destiné à l'écran sur la base des instructions graphiques.

L'invention propose ainsi notamment un dispositif d'affichage de graphiques sur au moins un écran, caractérisé en ce qu'il comprend :
- un processeur apte à être relié à un réseau et à recevoir via le réseau des instructions graphiques générées par une première application et des instructions graphiques générées par une seconde application ;
- une carte graphique associée au processeur et apte à exécuter les instructions graphiques reçues par le processeur pour affichage sur l'écran.

L'invention propose aussi un dispositif de génération de graphiques destinés à être affiché sur au moins un écran, caractérisé en ce qu'il comprend un processeur apte à exécuter une première application générant des instructions graphiques et une seconde application générant des instructions graphiques, et des moyens de transmission des instructions graphiques sur un réseau.

Enfin, l'invention propose un procédé d'affichage de graphiques sur au moins un écran, caractérisé en ce qu'il comprend les étapes suivantes :
- exécution d'une application générant des instructions graphiques ;
- exécution d'une seconde application générant des instructions graphiques ;
- transmission des instructions graphiques sur un réseau ;
- exécution par une carte graphique des instructions graphiques reçues du réseau pour affichage sur l'écran.

D'autres caractéristiques et avantages de l'invention apparaîtront à la lumière de la description qui suit, faite en référence aux dessins dans lesquels :
- la figure 1 représente les éléments de base d'un système d'affichage réalisé conformément aux enseignements de l'invention ;
- la figure 2 représente une première configuration d'un système d'affichage conforme aux enseignements de l'invention ;
- la figure 3 représente une seconde configuration du système de la figure 2.

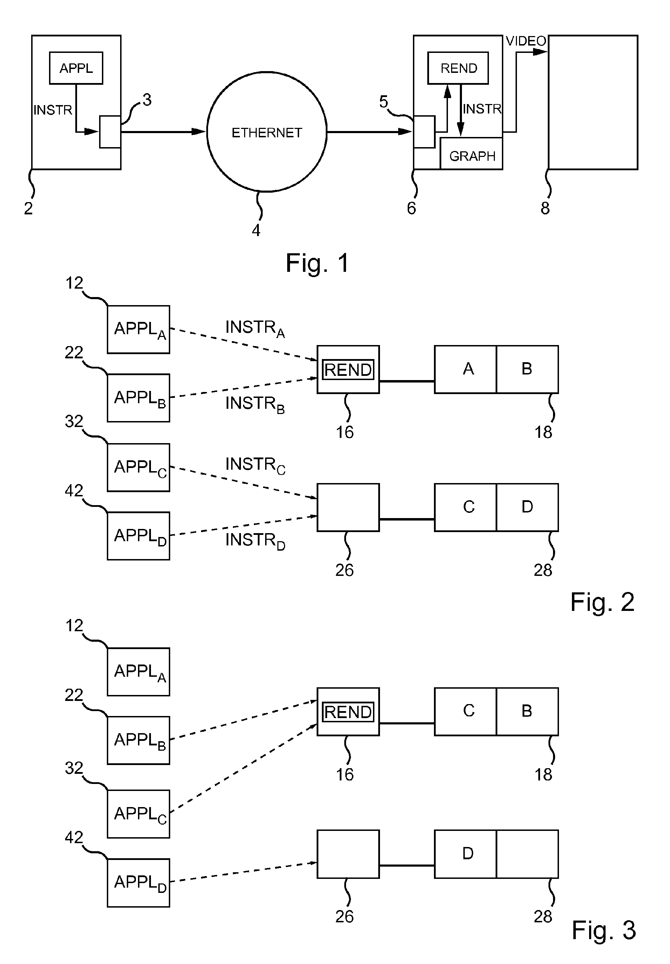

Le système représenté à la **figure 1** comprend un premier ordinateur personnel 2 (ou PC selon l'acronyme de l'expression anglosaxonne "*Personal Computer*") équipé de moyens de communication 3 (typiquement une carte réseau) pour connexion à un réseau Ethernet 4, et un second ordinateur personnel 6 qui comprend également des moyens de communication 5 pour connexion au réseau Ethernet 4.

Un processeur du premier ordinateur personnel 2 exécute une application graphique APPL qui génère des instructions (ou directives) graphiques INSTR destinées à une carte graphique.

Les graphiques produits par l'application graphique APPL et représentés au moyen des instructions graphiques INSTR sont par exemple des éléments destinés à être affichés dans un cockpit d'avion, tels que les éléments graphiques d'un altimètre, d'un plan de vol, d'une checklist (auquel cas les graphiques sont pour l'essentiel des caractères) ou toute autre information devant être affichée à l'intention du pilote.

Les instructions graphiques INSTR sont des instructions d'une bibliothèque standard (par exemple OpenGL ou directX) et sont donc interprétables (et donc exploitables) par une carte graphique standard.

Les instructions graphiques INSTR sont émises par le processeur du premier ordinateur 2 sur le réseau 4 au moyen de la carte 3. Pour ce faire, les instructions graphiques INSTR sont par exemple encapsulées dans un message à destination du second ordinateur 6, par exemple avec ajout d'informations qui permettent au second ordinateur 6 de les identifier de manière unique afin d'en déduire le traitement approprié.

Le message contenant les instructions graphiques INSTR est envoyé du premier ordinateur 2 vers le second ordinateur 6 via le réseau 4, par exemple au moyen d'une connexion client-serveur entre le premier ordinateur 2 et le second ordinateur 6.

On peut prévoir par exemple que l'ordinateur destinataire des messages émis par le premier ordinateur 2 soit défini au niveau d'un système pilote également connecté au réseau 4. Un tel système pilote, réalisé par exemple par un autre ordinateur personnel, permet ainsi de définir le lieu d'affichage (écran ou région d'écran) des instructions graphiques générées par un ordinateur donné et de coordonner l'ensemble afin par exemple que deux ordinateurs (du type du premier ordinateur 2) ne puisse viser la même région d'un écran.

Les instructions graphiques INSTR sont reçues au niveau du second ordinateur 6 au moyen de la carte réseau 5, qui les transmet à un processeur du second ordinateur 6, précisément à une application de rendu REND exécutée par ce processeur.

Dans l'exemple décrit ici, l'application REND reçoit le message au sein duquel les instructions graphiques INSTR sont encapsulées.

L'application de rendu REND transmet alors les instructions graphiques INSTR à une carte graphique 7 qui équipe le second ordinateur 6 et qui génère, en fonction des instructions graphiques reçues, un signal vidéo (par exemple de type RGB, ou en variante de type VGA ou de type DVI) à destination d'un écran 8 associé au second ordinateur 6.

L'application graphique APPL exécutée sur le premier ordinateur 2 peut ainsi commander l'affichage sur l'écran 8 associé au second ordinateur 6 en adressant un message contenant les instructions graphiques INSTR via le réseau 4.

Le système qui vient d'être décrit est intéressant en particulier lorsque plusieurs ordinateurs du type du premier ordinateur 2 (ordinateurs dit *"applicatifs"* et plusieurs écrans associés chacun à un ordinateur du type du second ordinateur 6 sont connectés au réseau 4, comme dans l'exemple ci-après. Il est alors en effet possible de manière simple de commander, à partir de l'un quelconque des ordinateurs applicatifs, l'affichage sur l'un quelconque des écrans, et ce sans limitation du nombre des différents éléments.

La **figure 2** représente ainsi un système d'affichage dans lequel quatre ordinateurs applicatifs 12, 22, 32, 42 exécutent chacun une application graphique (respectivement dénotée APPL_{A}, APPL_{B}, APPL_{C}, APPL_{D}).

Chaque ordinateur 12, 22, 32, 42 émet (du fait de l'exécution de l'application correspondante) sur le réseau 4 des instructions graphiques respectives INSTR_{A}, INSTR_{B}, INSTR_{C}, INSTR_{D}.

Le réseau 4 de la figure 1 n'a par souci de simplification pas été représenté en figure 2 où la transmission des instructions graphiques via ce réseau est représentée par des flèches pointillées.

L'application graphique APPL_{A} exécutée par l'ordinateur 12 émet les instructions graphiques INSTR_{A} qu'il génère à destination d'un ordinateur de rendu 16 et précisément à une application REND exécutée par le processeur de cet ordinateur de rendu 16.

L'application REND transmet les instructions graphiques qu'elle reçoit à une carte graphique (non représentée) de l'ordinateur de rendu 16 pour affichage des graphiques représentées par ces instructions graphiques INSTR_{A} sur la partie gauche d'un écran 18. La zone de l'écran sur laquelle est réalisé l'affichage est par exemple déterminée par configuration de l'application REND par le système pilote déjà mentionné (qui définit l'attribution d'une zone d'écran particulière à un ordinateur applicatif donné).

L'application graphique APPL_{B} exécutée par l'ordinateur applicatif 22 émet quant à elle des instructions graphiques INSTR_{B} à destination de l'application de rendu REND exécutée par le processeur de l'ordinateur de rendu 16 ; cette application de rendu REND, configurée comme déjà indiqué par le système pilote, transmet les instructions graphiques reçues INSTR_{B} à la carte graphique déjà mentionnée de l'ordinateur de rendu 16 pour affichage sur la partie droite de l'écran 18.

Sur la base des instructions graphiques reçues via le réseau d'une part de l'application graphiques APPL_{A} et d'autre part de l'application graphique APPL_{B}, la carte graphique (non représentée) de l'ordinateur de rendu 16 génère donc un signal vidéo à destination de l'écran 18. Ce signal représente une image dont la partie gauche correspond aux graphiques représentés par les instructions graphiques INSTR_{A} et dont la partie droite correspond aux graphiques représentés par les instructions graphiques INSTR_{B}.

De manière analogue (et donc non décrite à nouveau), l'application graphique APPL_{C} exécutée par l'ordinateur 32 émet des instructions graphiques INSTR_{C} à destination d'un ordinateur de rendu 26 associé à un écran 28 en vue de l'affichage des graphiques représentés par ces instructions graphiques INSTR_{C} sur la partie gauche de l'écran 28.

L'application APPL_{D} exécutée par l'ordinateur 42 émet quant à elle à destination de ce même ordinateur de rendu 26 les instructions graphiques INSTR_{D} en vue de l'affichage des graphiques correspondant sur la partie droite de l'écran 28.

Lorsque l'on souhaite changer l'écran d'affichage de certains graphiques, il suffit que, sur commande du système pilote, l'application graphique APPL concernée émette, toujours via le réseau Ethernet 4, les instructions graphiques qu'elle génère à destination d'un autre ordinateur de rendu. Lorsque l'on souhaite changer la région d'affichage (sur un écran donné) de certains graphiques, il suffit de reconfigurer à l'aide du système pilote l'application de rendu associée à l'écran concerné afin que le nouvel affichage se fasse dans la nouvelle région souhaitée.

Ainsi par exemple dans l'exemple représenté en **figure 3****,** l'application graphique APPL_{A} n'émet plus d'instructions graphiques et les graphiques correspondants ne sont donc plus affichés.

Les instructions graphiques INSTR_{C} générées par l'application graphique APPL_{C} exécutée par l'ordinateur 32 sont quant à elle transmises à l'application de rendu REND exécutée par l'ordinateur de rendu 16 de telle sorte que les graphiques correspondants sont affichés en partie gauche de l'écran 18 (en lieu et place des graphiques générés par l'application APPL_{A} en figure 2). (Les changements de configuration sont gérés comme déjà indiqué par le système pilote.)

Les instructions graphiques INSTR_{D} générées par l'application APPL_{D} exécutée par l'ordinateur 42 sont dans l'exemple de la figure 3 toujours émises à destination de l'ordinateur de rendu 26 (comme en figure 2) mais cette fois pour affichage sur le côté gauche de l'écran 28.

Les modes de réalisation qui viennent d'être décrits ne sont que des exemples possibles de mise en oeuvre de l'invention qui ne s'y limite pas. En particulier, bien que les exemples envisagés ci-dessus mettent en oeuvre des ordinateurs personnels, on peut naturellement appliquer l'invention à d'autres dispositifs à base de processeur. Par ailleurs, bien que l'on ait présenté ci-dessus des systèmes où une seule application graphique est exécutée sur chaque ordinateur, il est envisageable dans certains systèmes d'exécuter plusieurs applications graphiques sur un même ordinateur.

## Revendications

1. Système d'affichage de graphiques sur au moins un écran, **caractérisé en ce qu'**il comprend :
- un premier processeur apte à exécuter une première application (APPL; APPL_{A}) générant des instructions graphiques (INSTR; INSTR_{A}) ;
- des moyens d'exécution d'une seconde application (APPL_{B}) générant des instructions graphiques (INSTR_{B}) ;
- un second processeur relié au premier processeur au moyen d'un réseau (4) apte à transmettre les instructions graphiques (INSTR; INSTR_{A}) du premier processeur au second processeur ;
- une carte graphique (7) associée au second processeur et apte à exécuter les instructions graphiques (INSTR; INSTR_{A}) reçues par le second processeur et les instructions graphiques (INSTR_{B}) générées par la seconde application (APPL_{B}) et reçues via le réseau (4).

2. Système d'affichage selon la revendication 1, comprenant une pluralité d'écrans (18; 28) dans lequel à chaque écran (18; 28) est associée une carte graphique apte à exécuter les instructions graphiques (INSTR_{A}, INSTR_{C}).

3. Système d'affichage selon la revendication 1 ou 2, dans lequel le réseau (4) est de type Ethernet.

4. Système d'affichage selon l'une des revendications 1 à 3, dans lequel un serveur comprend la carte graphique et le second processeur.

5. Système d'affichage selon l'une des revendications 1 à 4, dans lequel la carte graphique est apte à générer un signal vidéo (VIDEO) destiné à l'écran (8) sur la base des instructions graphiques (INSTR).

6. Dispositif d'affichage de graphiques sur au moins un écran, **caractérisé en ce qu'**il comprend :
- un processeur apte à être relié à un réseau (4) et à recevoir via le réseau des instructions graphiques générées par une première application et des instructions graphiques générées par une seconde application ;
- une carte graphique (7) associée au processeur et apte à exécuter les instructions graphiques (INSTR) reçues par le processeur pour affichage sur l'écran (8).

7. Dispositif de génération de graphiques destinés à être affiché sur au moins un écran, **caractérisé en ce qu'**il comprend un processeur apte à exécuter une première application (APPL) générant des instructions graphiques et une seconde application générant des instructions graphiques, et des moyens de transmission (3) des instructions graphiques sur un réseau (4).

8. Procédé d'affichage de graphiques sur au moins un écran, **caractérisé en ce qu'**il comprend les étapes suivantes :
- exécution d'une première application (APPL_{A}) générant des instructions graphiques (INSTR_{A}) ;
- exécution d'une seconde application (APPL_{B}) générant des instructions graphiques (INSTR_{B}) ;
- transmission des instructions graphiques (INSTR_{A}, INSTR_{B}) sur un réseau (4) ;
- exécution par une carte graphique (7) des instructions graphiques (INSTR_{A}, INSTR_{B}) reçues du réseau (4) pour affichage sur l'écran (8).
